# FASCICULE DE BREVET EUROPEEN

(11) **EP 1 659 042 B1**
(45) Date de publication et mention de la délivrance du brevet: **28.02.2007**
(21) Numéro de dépôt: 04292719.4
(22) Date de dépôt: 17.11.2004
(51) Int. Cl.: B60T 7/22, B60T 7/12

(54) **Procédé et système d'assistance à la conduite d'un véhicule**
Fahrzeugfahrhilfsverfahren und -System
Vehicle driving assistance, method and system

(43) Date de publication de la demande: 24.05.2006
(73) Titulaire: Delphi Technologies, Inc., Troy, MI 48007 (US)
(72) Inventeur: Groult, Xavier, 95470 Survilliers (FR)
(74) Mandataire: Abello, Michel

(56) Documents cités:
- DE-A1- 4 201 806
- DE-A1- 10 152 632
- US-A1- 2003 033 073
- US-A1- 2003 111 902
- US-A1- 2003 135 318

## Description

La présente invention se rapporte à un procédé d'assistance à la conduite ainsi qu'un dispositif pour la mise en oeuvre du procédé. Plus particulièrement, la présente invention concerne un procédé dans lequel la distance entre un véhicule et un obstacle est mesurée et prise en compte pour freiner automatiquement le véhicule avant qu'il ne heurte l'obstacle.

Certains véhicules sont équipés de capteurs de distance pour aider un conducteur dans des situations de mauvaise visibilité, par exemple lorsqu'il doit se parquer en marche arrière. Dans certains véhicules, un signal sonore est émis avec une fréquence d'autant plus élevée que le véhicule est proche d'un obstacle. Le conducteur doit alors estimer lui-même la force de freinage qu'il convient d'appliquer. Dans d'autres véhicules connus, la distance mesurée par les capteurs de distance est utilisée par un contrôleur pour freiner automatiquement le véhicule. Cependant, une intervention du conducteur est toujours nécessaire. En cas de fausse manoeuvre, le véhicule peut heurter un obstacle et être endommagé. Ce risque est particulièrement grand dans le cas de manoeuvre sur une surface en pente avec peu d'espace libre autour du véhicule. En effet, une pente de 2 à 3 % suffit à mettre une voiture en mouvement si elle n'est pas freinée.

On connaît de DE 101 52 632 un véhicule disposant d'un régulateur de vitesse associé à un détecteur de distance, qui intervient de façon à conserver une distance constante par rapport au véhicule qui précède. En fonction de la distance par rapport à ce véhicule il applique une force sur les freins qui est fonction de la distance mesurée. Il agit également sur le frein de parking lorsque la vitesse reste nulle pendant un certain temps.

On connaît de US 2003/033073 un véhicule disposant d'un régulateur de vitesse, associé à un détecteur de distance, qui désengage le frein normal et engage le frein de parking lorsque la vitesse du véhicule devient nulle pendant un certain temps.

On connaît de US 2003/135318 un véhicule disposant d'un régulateur de vitesse, associé à un détecteur de distance, qui maintient constante une distance prédéterminée vis à vis d'un autre véhicule lorsque la vitesse devient inférieure à 40 Km/h

On connaît de DE-4 201 806 un véhicule comprenant un capteur de distance mesurant la distance entre le véhicule et un obstacle situé à l'arrière du véhicule. Quand cette distance est inférieure à un seuil déterminé, une unité de contrôle active une pompe qui augmente la pression des freins hydrauliques afin d'arrêter le véhicule.

On connaît enfin de US2003/0111902 un camion comprenant un capteur de distance mesurant la distance entre le camion et un quai de déchargement situé à l'arrière du camion. Le camion comprend également un capteur de vitesse. Une unité de contrôle possède en mémoire un profil minimum et un profil maximum définissant, pour une distance donnée, une plage de vitesse dans laquelle doit se situer la vitesse du camion. Si ce n'est pas le cas, l'unité de contrôle envoie des impulsions de commande à une vanne de pression pour augmenter ou diminuer la pression des freins hydrauliques du camion de manière à ce que le camion s'arrête automatiquement contre le quai de déchargement. Quand le camion est arrêté, la pression hydraulique est maintenue quelques secondes. Si on coupe le moteur, la pression ne peut être maintenue. Dans ce cas, le conducteur doit manuellement enclencher le frein de stationnement pour que le camion soit maintenu en place. En cas d'oubli de la part du conducteur, si le camion se trouve sur une surface en pente il peut se déplacer dans le sens de la pente et heurter un obstacle.

L'invention à pour but de proposer un procédé et un système d'assistance qui permettent de parquer un véhicule de manière aisée, sans heurter un obstacle.

Pour cela, l'invention fournit un procédé d'assistance à la conduite d'un véhicule, le procédé comprenant les étapes consistant en :
mesurer une distance entre ledit véhicule et un obstacle à l'aide d'au moins un capteur de distance,
appliquer une force de freinage sur au moins une roue dudit véhicule à l'aide d'un dispositif de freinage, ladite force de freinage étant adaptée en fonction de la distance mesurée par ledit capteur de distance de manière à arrêter ledit véhicule avant de heurter ledit obstacle,
ladite force de freinage étant appliquée à l'aide d'un dispositif de freinage électrique muni d'un frein de stationnement intégré permettant de verrouiller ledit dispositif de freinage électrique dans une position de serrage,
ledit procédé comprenant l'étape consistant à enclencher ledit frein de stationnement quand ledit véhicule est à l'arrêt depuis une durée prédéterminée,
caractérisé en ce qu'il comprend une boucle de calcul itérative incluant les étapes consistant à :
   déterminer un taux de variation temporelle de force de freinage en fonction de la distance mesurée par ledit capteur de distance,
   modifier ladite force de freinage appliquée par ledit dispositif de freinage selon ledit taux de variation temporelle, la force de freinage à appliquer lors d'une itération de ladite boucle de calcul étant calculée en faisant la somme de la force de freinage à l'itération précédente et du produit dudit taux de variation temporelle par un temps d'exécution de ladite boucle itérative.
   ledit procédé comprenant l'étape consistant à mesurer une force de freinage initiale appliquée par ledit dispositif de freinage avant l'entrée dans ladite boucle de calcul, la force de freinage à l'itération précédente lors du premier passage dans ladite boucle itérative étant prise égale à ladite force de freinage initiale.

Ainsi, le véhicule est automatiquement arrêté, le frein de stationnement automatiquement enclenché sans intervention du conducteur, et la force de freinage appliquée est rapidement adaptée à une nouvelle situation. Par exemple, si l'obstacle n'est pas immobile mais se rapproche ou s'éloigne du véhicule, le taux de variation temporelle de la force de freinage sera modifié de sorte que la force de freinage soit rapidement adaptée à la nouvelle position de l'obstacle.

De plus, le procédé peut être mis en oeuvre facilement par un unique dispositif de freinage sous la commande d'un contrôleur.

De préférence, ledit procédé comprend les étapes consistant en:
déterminer la pente d'une surface sur laquelle se trouve le véhicule à l'aide d'un capteur de pente,
adapter la force de serrage du frein de stationnement en fonction de ladite pente.

De cette manière, on assure que le véhicule est maintenu en place même sur une surface de pente importante.

Selon un mode de réalisation particulier, le procédé comprend les étapes consistant en:
déterminer une distance restant à parcourir en soustrayant une distance d'arrêt cible prédéterminée de la distance mesurée par le capteur de distance,
déterminer une vitesse d'ensemble du véhicule,
déterminer une distance d'arrêt prévisible en fonction de la vitesse d'ensemble et d'une décélération cible prédéterminée,
déterminer un terme de rétroaction en fonction de la différence entre la distance d'arrêt prévisible et la distance restant à parcourir,
déterminer ledit taux de variation temporelle de force de freinage en fonction du terme de rétroaction.

Avec une rétroaction de ce type, le véhicule est freiné de manière à ce qu'il s'arrête à une distance prédéterminée de l'obstacle, avec une grande précision.

Le fait de prendre en compte la vitesse du véhicule pour déterminer le taux de variation temporelle permet également d'adapter rapidement la force de freinage à une nouvelle situation. Par exemple, si le véhicule est percuté par un deuxième véhicule et que sa vitesse augmente subitement, la force de freinage sera rapidement adaptée à la nouvelle vitesse.

De préférence, ledit procédé comprend les étapes consistant en :
déterminer un sens de déplacement du véhicule,
calculer le taux de variation temporelle en fonction du sens de déplacement dudit véhicule.

Cela permet de compenser le freinage qui peut être moins efficace en marche avant par rapport au freinage en marche arrière. En effet en cas de freinage vers l'avant, un transfert de charge s'effectue sur le train avant délestant ainsi le train arrière. Cela implique un freinage moins efficace notamment dans le cas ou le freinage ne s'effectue que sur le train arrière.

Avantageusement, l'invention comprend les étapes consistant en :
déterminer la pente de la surface sur laquelle se trouve le véhicule à l'aide d'un capteur de pente,
calculer le taux de variation temporelle en fonction de la pente.

Le fait de prendre en compte la pente pour déterminer le taux de variation temporelle permet aussi d'adapter rapidement la force de freinage à une nouvelle situation. Par exemple, si le véhicule parcourt un trajet au cours duquel la pente change, la force de freinage sera rapidement adaptée à la nouvelle pente.

Selon un mode de réalisation particulier, le terme de rétroaction est calculé en :
faisant la somme d'un terme proportionnel à la différence entre ladite distance d'arrêt prévisible et ladite distance restant à parcourir, d'un terme proportionnel à la dérivée temporelle de ladite différence et d'un terme proportionnel à une intégrale temporelle de ladite différence,
faisant le produit de ladite somme par un gain, ledit gain étant fonction dudit sens de déplacement dudit véhicule,
ajoutant un terme de distance audit produit quand la distance restant à parcourir est inférieure à un seuil de proximité ou quand la différence entre ladite distance d'arrêt prévisible et ladite distance restant à parcourir est supérieure à un seuil de différence,
ajoutant un terme de pente audit produit, ledit terme de pente étant fonction de ladite pente,
ledit taux de variation temporelle étant égal audit terme de rétroaction ainsi obtenu.

L'invention fournit également un système d'assistance à la conduite d'un véhicule, le système comprenant un contrôleur de freinage, un dispositif de freinage apte à appliquer une force de freinage sur au moins une roue du véhicule sous la commande du contrôleur de freinage, au moins un capteur de distance apte à mesurer la distance entre le véhicule et un obstacle, le contrôleur de freinage étant apte à adapter la force de freinage en fonction de la distance mesurée par le capteur de distance de façon à arrêter ledit véhicule avant que ledit véhicule heurte ledit obstacle, ledit dispositif de freinage étant un dispositif de freinage électrique muni d'un frein de stationnement intégré, ledit contrôleur de freinage étant apte à enclencher le frein de stationnement lorsque le véhicule est arrêté depuis une durée prédéterminée, caractérisé en ce que ledit contrôleur de freinage est apte à exécuter une boucle de calcul itérative incluant les étapes consistant à
déterminer un taux de variation temporelle de force de freinage en fonction de la distance mesurée par ledit capteur de distance,
modifier ladite force de freinage appliquée par ledit dispositif de freinage selon ledit taux de variation temporelle, la force de freinage à appliquer lors d'une itération de ladite boucle de calcul étant calculée en faisant la somme de la force de freinage à l'itération précédente et du produit dudit taux de variation temporelle par un temps d'exécution de ladite boucle itérative, ledit système comprenant un capteur de force de serrage apte à mesurer une force de freinage initiale appliquée par ledit dispositif de freinage, la force de freinage à l'itération précédente lors du premier passage dans ladite boucle itérative étant prise égale à ladite force de freinage initiale.

De préférence, le système comprend un capteur de pente apte à mesurer la pente d'une surface sur laquelle se trouve le véhicule, le contrôleur étant apte à régler une force de serrage du frein de stationnement en fonction de ladite pente.

Avantageusement, le dispositif de freinage comprend au moins un étrier électromécanique incluant deux plaquettes aptes à exercer une force de serrage sur un disque solidaire d'une roue du véhicule, un moteur électrique apte à déplacer lesdites deux plaquettes et un verrou mécanique pouvant être commuté dans une position stable de verrouillage dans laquelle lesdites plaquettes sont maintenues dans un état dans lequel lesdites plaquettes exercent une force de serrage élevée sur ledit disque.

Selon un mode de réalisation préféré, le système comprend un capteur de vitesse apte à mesurer une vitesse d'ensemble du véhicule, le contrôleur de freinage étant apte à déterminer le taux de variation en fonction de la vitesse d'ensemble.

De préférence, le contrôleur de freinage est apte à déterminer le taux de variation en fonction de la pente.

De préférence, le système comprend au moins un capteur de distance placé à l'arrière du véhicule de manière à mesurer la distance entre le véhicule et un obstacle se situant dans la trajectoire du véhicule lorsqu'il roule en marche arrière.

Avantageusement, le système comprend au moins au capteur de distance placé à l'avant du véhicule de manière à mesurer la distance entre le véhicule et un obstacle se situant dans la trajectoire du véhicule lorsqu'il roule en marche avant.

De préférence, le système comprend plusieurs capteurs de distance (par exemple plusieurs capteurs de distance placés à l'avant ou plusieurs capteurs de distance placés à l'arrière) et un capteur d'angle apte à mesurer l'angle formé par les roues directrices du véhicule par rapport à l'axe longitudinal du véhicule, le contrôleur de freinage étant apte à déterminer la distance entre le véhicule et l'obstacle en fonction des distances mesurées par les capteurs de distance et de l'angle mesuré par le capteur d'angle.

L'invention sera mieux comprise, et d'autres buts, détails, caractéristiques et avantages de celle-ci apparaîtront plus clairement au cours de la description suivante d'un mode de réalisation particulier de l'invention, donné uniquement à titre illustratif et non limitatif, en référence aux dessins annexés. Sur ces dessins :
- la figure 1 est une représentation schématique de véhicule comprenant un système d'assistance à la conduite selon une mode de réalisation l'invention,
- la figure 2 illustre les étapes d'un programme de mise en oeuvre du procédé d'assistance à la conduite selon ce mode de réalisation.

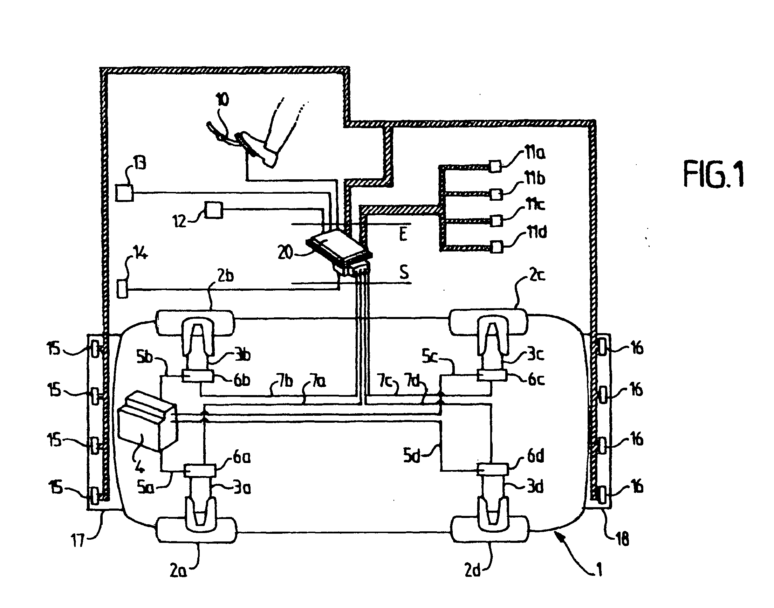

Sur la figure 1, un véhicule automobile 1 est représenté schématiquement en vue de dessus. Le véhicule 1 comporte deux roues avant 2a et 2b et deux roues arrière 2c et 2d. D'une manière générale, la description d'une pluralité de mécanismes identiques sera faite en décrivant, au singulier, un seul des mécanismes.

Chacune des roues 2a-d est équipée d'un étrier électromécanique 3a-d. L'étrier électromécanique 3a-d est apte à exercer une force de serrage sur un disque solidaire de la roue 2a-d. Plus particulièrement, la force de serrage est obtenue par rapprochement mutuel de deux plaquettes de frein disposées de part et d'autre du disque. La force de serrage orthogonale au disque génère un couple de freinage apte à réduire la vitesse angulaire de rotation du disque et donc de la roue 2a-d. L'étrier électromécanique 3a-d comporte un moteur électrique et un système de couplage permettant de transformer le mouvement de rotation de l'arbre de sortie du moteur électrique en un mouvement de translation d'une plaquette vers ou à l'écart de l'autre. Le moteur électrique de l'étrier électromécanique 3a-d est alimenté en puissance électrique au travers d'un onduleur 6a-d. Ce dernier ajuste les paramètres du courant électrique fourni par une batterie 4 via une ligne d'alimentation 5a-d pour alimenter le moteur électrique.

L'étrier électromécanique 3a-d est aussi muni d'une fonction de frein de stationnement intégrée. Pour cela, l'étrier 3a-d comprend un verrou mécanique pouvant être commuté dans une position stable de verrouillage pour verrouiller le système de couplage dans une position dans laquelle les plaquettes exercent une force de serrage élevée sur le disque de la roue 2a-d. Ainsi, même si l'alimentation du moteur est coupée, la force de serrage est maintenue, empêchant le véhicule de se déplacer. Un tel étrier électromécanique est connu par exemple d'après US-6 315 092 ou WO 03/050437.

Le véhicule 1 comporte un contrôleur 20 embarqué. Le contrôleur 20 a au moins une mémoire et un processeur destiné à exécuter divers programmes stockés dans la mémoire. Le contrôleur 20 comporte également une série d'entrées, globalement indiquées par la lettre E, et une série de sorties S. Le contrôleur 20 est, en conséquence, muni, pour chacune des entrées E, de moyens d'acquisition de données aptes à lire le signal sur l'entrée correspondante et à écrire la valeur se rapportant au signal lu dans un espace mémoire prédéterminé. De manière similaire, pour chaque sortie S, le contrôleur 20 comporte des moyens d'émission aptes à lire des données dans un espace prédéterminé de la mémoire et à émettre un signal sur la sortie correspondante, en rapport avec la donnée lue.

Le véhicule 1 comporte une série de capteurs connectés en entrée du contrôleur 20.

Le véhicule 1 comporte un capteur de demande de freinage 10 apte à émettre un signal en fonction de l'enfoncement d'une pédale de frein sur laquelle le conducteur du véhicule appuie lorsqu'il souhaite freiner. De préférence, le signal émis est proportionnel, ou plus généralement corrélé positivement, avec le degré d'enfoncement de la pédale de frein.

Le véhicule 1 comporte également quatre capteurs de vitesse de roue 11a-d. Le capteur de vitesse de roue 11a-d mesure la vitesse angulaire de rotation de la roue 2a-d. Par exemple, le capteur de vitesse de roue 11a-d comporte une partie fixe montée sur la caisse du véhicule 1 et une partie mobile fixée sur la roue 2a-d. Le nombre de passage par unité de temps de la partie mobile en vis-à-vis de la partie fixe donne une mesure de la vitesse angulaire de la roue. Il est aisé de connaître la vitesse linéaire du point de contact de la roue sur le sol en multipliant la vitesse angulaire par le rayon de la roue 2a-d. Le contrôleur 20 exécute en temps réel un programme permettant au processeur de calculer la vitesse d'ensemble du véhicule 1, à partir des vitesses angulaires instantanées mesurées sur les différentes roues par les capteurs 11a-d.

Par ailleurs, l'étrier électromécanique 3a-d comporte, en guise de capteur de force de serrage par exemple tel que mentionné par US-6 315 092 colonne 3 lignes 42-46, un capteur piézoélectrique (non représenté) apte à mesurer la force de serrage réellement appliquée par l'étrier électromécanique 3a-d sur le disque de frein. Les différents capteurs de forces de serrage sont connectés en entrée du contrôleur 20. D'autres moyens d'estimation de la force de serrage pourraient être envisagés sans pour autant sortir du cadre de la présente invention. Par exemple, il est possible d'estimer la force de serrage à partir de mesures d'angle et d'intensité, comme décrit par FR-2 855 610. Connaissant la force de serrage, le contrôleur 20 peut facilement calculer le couple de freinage correspondant.

Le véhicule 1 est muni d'un capteur de pente 12 apte à mesurer la pente de la surface sur laquelle se trouve le véhicule.

Un bouton d'activation 13 est situé sur le tableau de bord du véhicule 20. Le bouton 13 est manipulable par le conducteur du véhicule pour indiquer au contrôleur 20 si la fonction d'assistance à la conduite peut être activée.

Le véhicule comprend également d'autres capteurs non représentés sur la figure 1 : un capteur de sens pour déterminer si le véhicule se déplace vers l'avant ou vers l'arrière, un capteur de boîte de vitesse pour déterminer quel rapport est enclenché et, dans le cas d'une boîte manuelle, l'état débrayé ou embrayé, et un capteur d'angle apte à mesurer l'angle formé par les roues directrices du véhicule par rapport à son axe longitudinal.

Le véhicule 1 comprend quatre capteurs de distance avant 15 et quatre capteurs de distance arrière 16 positionnés respectivement dans le pare-chocs avant 17 et le pare-chocs arrière 18. Les capteurs de distance sont répartis uniformément le long du pare-chocs. Ces capteurs de distance peuvent être par exemple des capteurs infrarouges ou des capteurs radars. Ils permettent au contrôleur 20 de mesurer une distance D0 entre le véhicule et un obstacle se trouvant dans sa trajectoire. Pour déterminer cette distance D0, le contrôleur 20 utilise les quatre distances mesurées par les capteurs 15 ou 16 correspondant au sens de déplacement du véhicule, indiqué par le capteur de sens. La distance D0 entre le véhicule et l'obstacle est par exemple programmée pour être la moyenne entre les quatre distances mesurées par les capteurs 15 ou 16. Cette moyenne peut éventuellement être une moyenne pondérée en fonction de l'angle mesuré par le capteur d'angle, afin de tenir compte du déplacement latéral du véhicule. Alternativement la distance D0 peut être choisie égale à la distance minimale parmi les distances mesurées par les capteurs de distance 15 ou 16.

Le contrôleur 20 a, entre autres, pour fonction d'exécuter des programmes en temps réel permettant de calculer la valeur de la force de serrage que chacun des étriers électromécaniques 3a-d doit appliquer. Ainsi, la force de freinage n'est pas simplement proportionnelle à l'enfoncement mesuré par le capteur 10, mais est calculée de manière à améliorer le confort, la sécurité, la facilité de conduite du véhicule,... Un des programmes permet de réaliser la fonction d'assistance à la conduite selon l'invention. D'autres programmes peuvent être prévus pour réaliser d'autres fonctions, par exemple le contrôleur 20 peut exécuter un programme d'antiblocage des roues (ABS). La valeur de la force de serrage calculée à chaque instant par le contrôleur 20 est dite force de serrage cible. Le contrôleur 20 émet, sur la sortie correspondante, un signal de commande en rapport avec la force de serrage cible en direction de l'onduleur 6a-d au travers de la liaison électrique associée 7a-d. En réponse à ce signal de commande, l'onduleur 6a-d actionne le moteur électrique de l'étrier électromécanique 3a-d pour que la force de serrage que ce dernier applique corresponde à la force de serrage cible. Certains des programmes exécutés par le contrôleur 20 peuvent donner comme résultat un couple de freinage à appliquer. Dans ce cas, le contrôleur 20 détermine la force de serrage cible correspondante.

Une sortie du contrôleur 20 correspond à un indicateur 14 de fonctionnement de la fonction d'assistance à la conduite. Cet indicateur 14 comprend une lampe verte et une lampe rouge situées sur le tableau de bord. Leur rôle sera expliqué ci-dessous.

Enfin, une sortie du contrôleur 20 est destinée à enclencher le frein de stationnement en commandant électriquement le verrou de l'étrier 3a-d. Par exemple, une sortie du contrôleur 20 est apte à magnétiser ou démagnétiser un électro-aimant. Un ressort pousse le verrou dans sa position de verrouillage alors que l'électro-aimant est apte, quand il est magnétisé, à déplacer le verrou hors de sa position de verrouillage, par exemple comme expliqué colonne 4 lignes 34-43 dans US-6 315 092.

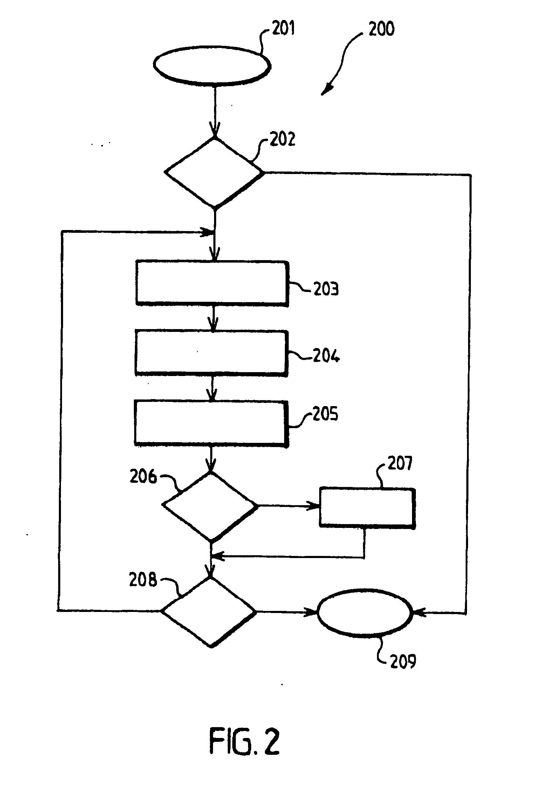

Si le bouton 13 est enfoncé, le processeur du contrôleur20 exécute périodiquement un programme de freinage d'arrêt 200 stocké dans sa mémoire afin de réaliser la fonction d'assistan ce à la conduite. La figure 2 représente, sous la forme d'un organigramme, le programme de freinage d'arrêt 200 selon le mode de réalisation actuellement préféré de l'invention. Si le bouton 13 n'est pas enfoncé, le contrôleur n'exécute pas le programme 200.

L'exécution du programme débute au point d'entrée 201 puis passe à l'étape 202 où le contrôleur 20 teste si des conditions d'entrée sont vérifiées.

En fonction du sens de déplacement du véhicule, le contrôleur 20 teste si les distances lues par les capteurs de distances 15 ou 16 sont inférieures à la distance maximale Dₘₐₓ de fonctionnement des capteurs de distance. Si c'est le cas, cette condition d'entrée est vérifiée. La distance maximale Dₘₐₓ est spécifiée par le constructeur des capteurs et est stockée dans la mémoire du contrôleur 20. Si la distance lue par les capteurs 15 ou 16 est supérieure à Dₘₐₓ, cela signifie premièrement que les distances lues ne sont pas fiables et deuxièmement que le véhicule 20 n'est pas proche d'un obstacle. Dans ce cas, cette condition d'entrée n'est pas vérifiée.

Le contrôleur 20 teste si la distance D0 entre le véhicule et l'obstacle est inférieure à un seuil de risque de collision Dᵣ. La distance Dᵣ est aussi stockée dans la mémoire. De préférence, deux valeurs D_{r_av} et D_{r_ar} sont mémorisées, correspondant respectivement à un déplacement en marche avant et en marche arrière. Si la distance D0 est inférieure au seuil Dᵣ correspondant au sens de déplacement du véhicule, la condition est vérifiée.

Le contrôleur 20 teste si la vitesse du véhicule est inférieure à un seuil prédéterminé Vₘₐₓ et supérieure à zéro. Si c'est le cas, cette condition d'entrée est vérifiée.

Dans le cas d'une boîte de vitesse manuelle, le contrôleur 20 teste si la boîte est dans l'état débrayé ou si le rapport sélectionné est le neutre. Dans le cas d'une boîte de vitesse automatique, le contrôleur 20 teste si le rapport sélectionné est le neutre. Si c'est le cas, cette condition d'entrée est vérifiée.

Enfin, le contrôleur 20 teste si le frein de stationnement est enclenché. Si c'est le cas, cette condition d'entrée n'est pas vérifiée.

Si au moins une de ces conditions n'est pas vérifiée, on passe en 209. Si toutes les conditions d'entrée sont vérifiées, on entre dans une boucle de calcul itérative 203-208 en passant à l'étape 203.

En 203, le contrôleur 20 effectue différents calculs afin de déterminer un taux de variation temporelle de couple de freinage Tx.

Le contrôleur 20 calcule une distance restant à parcourir D1 égale à la différence entre la distance D0 mesurée entre le véhicule et l'obstacle et une distance d'arrêt cible prédéterminée R0. Ainsi, si par exemple la distance R0 est 20 cm, le contrôleur freinera le véhicule pour qu'il s'arrête à 20 cm de l'obstacle.

Ensuite, le contrôleur calcule une distance d'arrêt prévisible D2 en fonction de la vitesse d'ensemble v du véhicule 1 et d'une décélération cible prédéterminée d de la façon suivante : D2 = v²/(2*d). La décélération d est par exemple de 6 m/s².

La différence D3 = D2 - D1 permet de déterminer si le véhicule va effectivement s'arrêter à la distance d' arrêt cible prédéterminée R0.

Un terme de rétroaction TC est calculé en faisant la somme d'un terme proportionnel à la distance D3, d'un terme proportionnel à la dérivée temporelle de la distance D3 et un terme proportionnel à une intégrale temporelle de la distance D3 (régulation PID).

Si le freinage s'effe ctue seulement sur les roues arrière, le terme TC est multiplié par un gain G1 pour obtenir un terme de rétroaction TC1 = TC * G1. Le gain a une valeur différente selon le sens de déplacement du véhicule. En effet en cas de freinage vers l'avant, un transfert de charge s'effectue sur le train avant délestant ainsi le train arrière. Cela implique un freinage moins efficace dans le cas ou le freinage ne s'effectue que sur le train arrière. Le gain G1 a donc une valeur plus importante lorsque le véhicule se déplace en marche avant, pour compenser le freinage moins efficace.

Un terme de rétroaction TC2 est égale à la somme du terme TC1 et d'une constante K2 : TC2 = TC1 + K2. La constante K2 permet d'assurer que le taux de variation temporelle Tx n'est pas nul. Dans un autre mode de réalisation, on n'ajoute pas K2.

Si la distance D1 est inférieure à un seuil de proximité R1 prédéterminé, par exemple 40 cm, ou si la distance D3 est supérieure à un seuil de différence R2 prédéterminé, par exemple 2 cm, un terme de rétroaction TC3 est calculé en faisant la somme du terme TC2 et d'un terme de distance K3. Sinon TC3 est égal à TC2. Cela permet d'augmenter le freinage quand on est proche de l'obstacle ou quand la grande valeur de D3 laisse prévoir qu'on ne s'arrêtera pas à la distance d'arrêt cible prédéterminée R0 par rapport à l'obstacle. En ajoutant le terme K3, on modifie le freinage de manière à améliorer la probabilité de s'arrêter effectivement à la distance d'arrêt cible prédéterminée.

Enfin, la pente de la surface sur laquelle se trouve le véhicule est prise en compte. Un terme de rétroaction TC4 est calculé en faisant la somme du terme TC3 et d'un terme de pente K4. Le terme K4 est positif si le véhicule descend, pour augmenter le freinage, il est négatif si le véhicule monte, pour diminuer le freinage, et nul si le véhicule est sur une surface horizontale.

Le taux de variation temporelle Tx est égal au terme TC4.

Ensuite l'exécution du programme passe à l'étape 204, dans laquelle le couple de freinage à appliquer CC(n) est calculé en faisant la somme du couple de freinage à l'itération précédente CC(n-1) et du produit du taux de variation Tx déterminé à l'étape 203 par le temps d'exécution τ de la boucle de calcul itérative 203-208. Lors du premier passage dans la boucle, le couple de freinage à l'itération précédente est un couple initial CC(0) qui est pris égal au couple de freinage correspondant à la force de serrage mesurée par le capteur piézoélectrique de l'étrier 3a-d. Ainsi il n'y a pas de discontinuité dans le couple à appliquer.

Si le calcul précédent donne pour résultat un couple supérieur à un couple maximal CCₘₐₓ, le couple à appliquer est ce couple CCₘₐₓ. Le couple CCₘₐₓ est choisi de manière à éviter le blocage des roues qui dégraderait l'efficacité du freinage et le confort.

En 205, on émet un signal de fonctionnement à l'aide de l'indicateur 14. La lampe verte est allumée sur le tableau de bord pour indiquer au conducteur que la fonction d'assistance à la conduite est active et que la force de freinage appliquée est celle calculée par le contrôleur 20 en exécution du programme 200. La lampe rouge est allumée si la distance D3 est supérieure à zéro, pour indiquer qu'il y a un risque de toucher l'obstacle. Dans ce cas, le conducteur peut prendre la décision d'appuyer sur la pédale de frein. L'indicateur 14 peut éventuellement comprendre un haut-parleur. Dans ce cas, le contrôleur 20 commande le haut-parleur pour qu'il émette un son avec une fréquence d'autant plus grande que la distance D0 est faible.

En 206, on teste si la vitesse du véhicule est nulle. Si c'est le cas, on passe en 207, sinon on passe en 208.

En 207, on entre dans un mode statique. Le contrôleur commande à l'étrier électromécanique 3a-d de continuer à appliquer le couple de freinage déterminé en 204 et détermine un couple de freinage pour le stationnement du véhicule. Ce couple de freinage pour le stationnement est d'autant plus élevé que la pente sur laquelle se trouve le véhicule 1 mesurée par le capteur de pente 12 est grande. Après une durée prédéterminée, par exemple après 2 s, le contrôleur 20 commande à l'étrier 3a-d d'appliquer le couple de freinage pour le stationnement du véhicule à l'aide du moteur électrique et enclenche le frein de stationnement en commandant électriquement le verrou de l'étrier 3a-d. Ainsi, le véhicule a été arrêté à distance de l'obstacle et le frein de stationnement a été enclenché avec un serrage suffisant, sans intervention du conducteur. L'exécution du programme passe en 208 puis en 209 puisque l'enclenchement du frein de stationnement est une condition de sortie.

En 208, le contrôleur 20 teste si des conditions de sortie sont vérifiées.

Le contrôleur 20 teste si le conducteur a désactivé la fonction d'assistance à la conduite à l'aide du bouton 13. Dans ce cas cette condition de sortie est vérifiée et la force de serrage à appliquer ne doit plus être déterminée par le programme 200.

Le contrôleur 20 teste si le frein de stationnement a été enclenché. C'est le cas si l'exécution du programme 200 est passée par l'étape 207. Cette condition de sortie est alors vérifiée.

Le contrôleur 20 teste également si la distance D0 est supérieure au seuil R0. En effet, l'obstacle peut s'être déplacé de sorte qu'il n'y a plus de risque de le toucher. Si c'est le cas, cette condition de sortie est vérifiée.

Si aucune des conditions de sortie n'est vérifiée, on retourne en 203. Sinon, l'exécution du programme passe en 209.

L'exécution du programme se termine au point de sortie 209. Périodiquement et tant que le bouton d'activation 13 est enfoncé, le contrôleur va exécuter à nouveau le programme 200 en commençant par le point d'entrée 201.

En variante au mode de réalisation qui vient d'être décrit, d'autres caractéristiques sont envisageables.

On a décrit un véhicule équipé d'un dispositif de freinage entièrement électrique. Alternativement, il pourrait s'agir d'un système de freinage hybride comprenant par exemple des étriers hydrauliques pour freiner les roues avant et des étriers électromécaniques pour freiner les roues arrière. Le procédé selon l'invention s'applique alors au freinage des roues arrière. La décélération cible est alors adaptée au nombre de roues freinées. Par exemple si on freine sur les deux roues arrière, la décélération cible est 2 ou 3 ou 4 m/s².

Dans le mode de réalisation décrit, il y a quatre capteurs de distance avant et quatre capteurs de distance arrière. Alternativement, il peut y avoir plus ou moins de capteurs de distance. Il peut ne pas y avoir de capteurs de distance avant ou pas de capteurs de distance arrière. Le contrôleur peut être adapté pour détecter les capteurs présents. Dans ce cas, si par exemple il détecte qu'il n'y a pas de capteurs avant, la fonction d'assistance à la conduite ne sera activée que si le véhicule se déplace en marche arrière.

On a décrit un programme dans lequel on calcule un couple de freinage. De manière équivalente, le programme pourrait calculer une force de serrage.

Le bouton d'activation décrit peut être remplacé par tout élément permettant au conducteur d'indiquer s'il veut que la fonction d'assistance soit active ou non.

Le contrôleur de freinage peut être constitué d'un module matériel (architecture centralisée) ou de plusieurs modules matériels (architecture distribuée). La fonction d'assistance est de préférence obtenue par programmation du contrôleur de freinage. Toutefois, cette fonction peut aussi être mise en oeuvre à l'aide d'un circuit électronique conçu spécifiquement à cette fin.

Le procédé décrit peut être mis en oeuvre avec d'autres conditions d'entrée ou de sortie que celles qui sont décrites. Par exemple la condition d'entrée sur le rapport sélectionné ou l'état débrayé de la boîte de vitesse peut être supprimée.

Bien que l'invention ait été décrite en liaison avec un mode de réalisation particulier, il est bien évident qu'elle n'y est nullement limitée et qu'elle comprend tous les équivalents techniques des moyens décrits ainsi que leurs combinaisons si celles-ci entrent dans le cadre de l'invention.

## Revendications

1. Procédé d'assistance à la conduite d'un véhicule (1), ledit procédé comprenant les étapes consistant en :
a) mesurer une distance entre ledit véhicule (1) et un obstacle à l'aide d'au moins un capteur de distance (15, 16),
b) appliquer une force de freinage sur au moins une roue (2a-d) dudit véhicule (1) à l'aide d'un dispositif de freinage (3a-d, 6a-d), ladite force de freinage étant adaptée en fonction de la distance mesurée par ledit capteur de distance (15, 16), de manière à arrêter ledit véhicule (1) avant de heurter ledit obstacle,
ladite force de freinage, étant appliquée à l'aide d'un dispositif de freinage électrique (3a-d, 6a-d) muni d'un frein de stationnement intégré permettant de verrouiller ledit dispositif de freinage électrique (3a-d, 6a-d) dans une position de serrage,
c) ledit procédé comprenant l'étape (207) consistant à enclencher ledit frein de stationnement quand ledit véhicule est à l'arrêt depuis une durée prédéterminée, **caractérisé en ce qu'**il comprend une boucle de calcul itérative incluant les étapes consistant à :
déterminer (203) un taux de variation temporelle de force de freinage en fonction de la distance mesurée par ledit capteur de distance (15, 16), modifier (204) ladite force de freinage appliquée par ledit dispositif de freinage (3a-d, 6a-d, 20) selon ledit taux de variation temporelle, la force de freinage à appliquer lors d'une itération de ladite boucle de calcul étant calculée en faisant la somme de la force de freinage à l'itération précédente et du produit dudit taux de variation temporelle par un temps d'exécution de ladite boucle itérative,
ledit procédé comprenant l'étape consistant à mesurer une force de freinage initiale appliquée par ledit dispositif de freinage avant l'entrée dans ladite boucle de calcul, la force de freinage à l'itération précédente lors du premier passage dans ladite boucle itérative étant prise égale à ladite force de freinage initiale.

2. Procédé selon la revendication 1, **caractérisé en ce qu'**il comprend les étapes consistant en :
déterminer la pente d'une surface sur laquelle se trouve ledit véhicule (1) à l'aide d'un capteur de pente (12),
adapter la force de serrage dudit frein de stationnement en fonction de ladite pente.

3. Procédé selon la revendication 1 ou la revendication 2, **caractérisé en ce qu'**il comprend les étapes consistant en :
déterminer une distance restant à parcourir en soustrayant une distance d'arrêt cible prédéterminée de la distance mesurée par ledit capteur de distance (15, 16),
déterminer une vitesse d'ensemble dudit véhicule (1),
déterminer une distance d'arrêt prévisible en fonction de ladite vitesse d'ensemble et d'une décélération cible prédéterminée,
déterminer un terme de rétroaction en fonction de la différence entre ladite distance d'arrêt prévisible et ladite distance restant à parcourir, déterminer ledit taux de variation temporelle de force de freinage en fonction dudit terme de rétroaction.

4. Procédé selon l'une des revendications 1 à 3, **caractérisé en ce qu'**il comprend les étapes consistant en :
déterminer un sens de déplacement dudit véhicule (1),
calculer ledit taux de variation temporelle en fonction dudit sens de déplacement dudit véhicule.

5. Procédé selon l'une quelconque des revendications 1 à 4, **caractérisé en ce qu'**il comprend les étapes consistant en :
déterminer la pente de la surface sur laquelle se trouve ledit véhicule (1) à l'aide d'un capteur de pente (12),
calculer ledit taux de variation temporelle en fonction de ladite pente.

6. Procédé selon l'une quelconque des revendications 3 à 5, **caractérisé en ce que** ledit terme de rétroaction est calculé en faisant la somme d'un terme proportionnel à la différence entre ladite distance d'arrêt prévisible et ladite distance restant à parcourir, d'un terme proportionnel à la dérivée temporelle de ladite différence et d'un terme proportionnel à une intégrale temporelle de ladite différence,
faisant le produit de ladite somme par un gain, ledit gain étant fonction dudit sens de déplacement dudit véhicule,
ajoutant un terme de distance audit produit quand la distance restant à parcourir est inférieure à un seuil de proximité ou quand la différence entre ladite distance d'arrêt prévisible et ladite distance restant à parcourir est supérieure à un seuil de différence,
ajoutant un terme de pente audit produit, ledit terme de pente étant fonction de ladite pente,
ledit taux de variation temporelle étant égal audit terme de rétroaction ainsi obtenu.

7. Système d'assistance à la conduite d'un véhicule (1), ledit système comprenant un contrôleur de freinage (20), un dispositif de freinage (3a-d, 6a-d) apte à appliquer une force de freinage sur au moins une roue (2a-d) dudit véhicule (1) sous la commande dudit contrôleur de freinage (20), au moins un capteur de distance (15, 16) apte à mesurer la distance entre ledit véhicule (1) et un obstacle, ledit contrôleur de freinage (20) étant apte à adapter ladite force de freinage en, fonction de la distance mesurée par ledit capteur de distance (15, 16) de façon à arrêter ledit véhicule avant que ledit véhicule (1) heurte ledit obstacle, ledit dispositif de freinage (3a-d, 6a-d) étant un dispositif de freinage électrique muni d'un frein de stationnement intégré, ledit contrôleur de freinage (20) étant apte à enclencher ledit frein de stationnement lorsque ledit véhicule (1) est arrêté depuis une durée prédéterminée,
**caractérisé en ce que** ledit contrôleur de freinage (20) est apte à exécuter une boucle de calcul itérative incluant les étapes consistant à
déterminer (203) un taux de variation temporelle de force de freinage en fonction de la distance mesurée par ledit capteur de distance (15, 16), modifier (204) ladite force de freinage appliquée par ledit dispositif de freinage selon ledit taux de variation temporelle, la force de freinage à appliquer lors d'une itération de ladite boucle de calcul étant calculée en faisant la somme de la force de freinage à l'itération précédente et du produit dudit taux de variation temporelle par un temps d'exécution de ladite boucle itérative, ledit système comprenant un capteur de force de serrage apte mesurer une force de freinage initiale appliquée par ledit dispositif de freinage, la force de freinage à l'itération précédente lors du premier passage dans ladite boucle itérative étant prise égale à ladite force de freinage initiale.

8. Système selon la revendication 7, **caractérisé en ce qu'**il comprend un capteur de pente (12) apte à mesurer la pente d'une surface sur laquelle se trouve ledit véhicule (1), ledit contrôleur (20) étant apte à régler une force de serrage dudit frein de stationnement en fonction de ladite pente.

9. Système selon la revendication 7 ou la revendication 8, **caractérisé par le fait que** ledit dispositif de freinage comprend au moins un étrier électromécanique incluant deux plaquettes aptes à exercer une force de serrage sur un disque solidaire d'une roue du véhicule, un moteur électrique apte à déplacer lesdites deux plaquettes et un verrou mécanique pouvant être commuté dans une position stable de verrouillage dans laquelle lesdites plaquettes sont maintenues dans un état dans lequel lesdites plaquettes exercent une force de serrage élevée sur ledit disque.

10. Système selon l'une des revendications 7 à 9, **caractérisé en ce qu'**il comprend un capteur de vitesse (11a-d) apte à mesurer une vitesse d'ensemble dudit véhicule, ledit contrôleur de freinage (20) étant apte à déterminer ledit taux de variation en fonction de ladite vitesse d'ensemble.

11. Système selon l'une des revendications 7 à 10, **caractérisé en ce que** ledit contrôleur de freinage (20) est apte à déterminer ledit taux de variation en fonction de ladite pente.

12. Système selon l'une quelconque des revendications 7 à 11, **caractérisé en ce qu'**il comprend au moins un capteur de distance (16) placé à l'arrière dudit véhicule (1) de manière à mesurer la distance entre ledit véhicule (1) et un obstacle se situant dans la trajectoire dudit véhicule (1) lorsqu'il roule en marche arrière.

13. Système selon l'une quelconque des revendications 7 à 12, **caractérisé en ce qu'**il comprend au moins au capteur de distance (15) placé à l'avant dudit véhicule (1) de manière à mesurer la distance entre ledit véhicule (1) et un obstacle se situant dans la trajectoire dudit véhicule (1) lorsqu'il roule en marche avant.

14. Système selon l'une quelconque des revendications 7 à 13, **caractérisé en ce qu'**il comprend plusieurs capteurs de distance (15, 16) et un capteur d'angle apte à mesurer l'angle formé par les roues (2ad) directrices dudit véhicule (1) par rapport à l'axe longitudinal dudit véhicule, ledit contrôleur de freinage (20) étant apte à déterminer la distance entre ledit véhicule (1) et ledit obstacle en fonction des distances mesurées par lesdits capteurs de distance (15, 16) et dudit angle mesuré par ledit capteur d'angle.

## Claims

1. Method to assist in the driving of a vehicle (1), said method comprising the steps consisting in:
a) measuring a distance between said vehicle (1) and an obstacle using at least one distance sensor (15, 16),
b) applying a braking force to at least one wheel (2a-d) of said vehicle (1) using a braking device (3a-d, 6a-d), said braking force being adjusted according to the distance measured by said distance sensor (15, 16), so as to stop said vehicle (1) before striking said obstacle,
said braking force being applied using an electric braking device (3a-d, 6a-d) provided with an integrated parking brake for locking said electric braking device (3a-d, 6a-d) in a clamping position,
c) said method comprising the step (207) consisting in engaging said parking brake when said vehicle has been stopped for a predetermined time,
**characterized in that** it comprises an iterative computation loop including the steps consisting in:
determining (203) a rate of variation over time of braking force according to the distance measured by said distance sensor (15, 16),
modifying (204) said braking force applied by said braking device (3a-d, 6a-d, 20) according to said rate of variation over time, the braking force to be applied on an iteration of said computation loop being computed by calculating the sum of the braking force on the preceding iteration and the product of said rate of variation over time by an execution time of said iterative loop,
said method comprising the step consisting in measuring an initial braking force applied by said braking device before entry into said computation loop, the braking force on the preceding iteration on the first pass in said iterative loop being taken to be equal to said initial braking force.

2. Method according to Claim 1, **characterized in that** it comprises the steps consisting in:
determining the slope of a surface on which said vehicle (1) is located using a slope sensor (12),
adjusting the clamping force of said parking brake according to said slope.

3. Method according to Claim 1 or Claim 2,
**characterized in that** it comprises the steps consisting in:
determining a remaining distance to be travelled by subtracting a predetermined target stopping distance from the distance measured by said distance sensor (15, 16),
determining an overall speed of said vehicle (1),
determining a predictable stopping distance according to said overall speed and a predetermined target deceleration,
determining a retroaction term according to the difference between said predictable stopping distance and said distance remaining to be travelled,
determining said rate of variation over time of braking force according to said retroaction term.

4. Method according to one of Claims 1 to 3, **characterized in that** it comprises the steps consisting in:
determining a direction of movement of said vehicle (1),
computing said rate of variation over time according to said direction of movement of said vehicle.

5. Method according to any one of Claims 1 to 4, **characterized in that** it comprises the steps consisting in:
determining the slope of the surface on which said vehicle (1) is located, using a slope sensor (12),
computing said rate of variation over time according to said slope.

6. Method according to any one of Claims 3 to 5, **characterized in that** said retroaction term is computed by calculating the sum of a term proportional to the difference between said predictable stopping distance and said distance remaining to be travelled, of a term proportional to the drift over time of said difference and of a term proportional to a time-oriented integral of said difference,
calculating the product of said sum by a gain, said gain being dependent on said direction of movement of said vehicle,
adding a distance term to said product when the distance remaining to be travelled is less than a proximity threshold or when the difference between said predictable stopping distance and said distance remaining to be travelled is greater than a difference threshold,
adding a slope term to said product, said slope term being dependent on said slope,
said rate of variation over time being equal to said duly obtained retroaction term.

7. System to assist in the driving of a vehicle (1), said system comprising a braking controller (20), a braking device (3a-d, 6a-d) able to apply a braking force to at least one wheel (2a-d) of said vehicle (1) under the control of said braking controller (20), at least one distance sensor (15, 16) able to measure the distance between said vehicle (1) and an obstacle, said braking controller (20) being able to adjust said braking force according to the distance measured by said distance sensor (15, 16) so as to stop said vehicle before said vehicle (1) strikes said obstacle,
said braking device (3a-d, 6a-d) being an electric braking device provided with an integrated parking brake, said braking controller (20) being able to engage said parking brake when said vehicle (1) has been stopped for a predetermined time,
**characterized in that** said braking controller (20) is able to execute an iterative computation loop including the steps consisting in:
determining (203) a rate of variation over time of braking force according to the distance measured by said distance sensor (15, 16),
modifying (204) said braking force applied by said braking device according to said rate of variation over time, the braking force to be applied on an iteration of said computation loop being computed by calculating the sum of the braking force on the preceding iteration and the product of said rate of variation over time by an execution time of said iterative loop, said system comprising a clamping force sensor able to measure an initial braking force applied by said braking device, the braking force on the preceding iteration on the first pass in said iterative loop being taken to be equal to said initial braking force.

8. System according to Claim 7, **characterized in that** it comprises a slope sensor (12) able to measure the slope of a surface on which said vehicle (1) is located, said controller (20) being able to adjust a clamping force of said parking brake according to said slope.

9. System according to Claim 7 or Claim 8, **characterized in that** said braking device comprises at least one electromechanical calliper including two pads able to exert a clamping force on a disc attached to a wheel of the vehicle, an electric motor able to move said two pads and a mechanical lock that can be switched into a stable locking position in which said pads are maintained in a state in which said pads exert a high clamping force on said disc.

10. System according to one of Claims 7 to 9, **characterized in that** it comprises a speed sensor (11a-d) able to measure an overall speed of said vehicle, said braking controller (20) being able to determine said rate of variation according to said overall speed.

11. System according to one of Claims 7 to 10, **characterized in that** said braking controller (20) is able to determine said rate of variation according to said slope.

12. System according to any one of Claims 7 to 11, **characterized in that** it comprises at least one distance sensor (16) placed at the back of said vehicle (1) so as to measure the distance between said vehicle (1) and an obstacle located in the path of said vehicle (1) when it is reversing.

13. System according to any one of Claims 7 to 12, **characterized in that** it comprises at least one distance sensor (15) placed at the front of said vehicle (1) so as to measure the distance between said vehicle (1) and an obstacle located in the path of said vehicle (1) when it is moving forward.

14. System according to any one of Claims 7 to 13, **characterized in that** it comprises a number of distance sensors (15, 16) and an angle sensor able to measure the angle formed by the guiding wheels (2a-d) of said vehicle (1) relative to the longitudinal axis of said vehicle, said braking controller (20) being able to determine the distance between said vehicle (1) and said obstacle according to the distances measured by said distance sensors (15, 16) and said angle measured by said angle sensor.

## Patentansprüche

1. Assistenzverfahren zum Führen eines Fahrzeugs (1), wobei das Verfahren die Schritte umfasst, bestehend aus:
a) Messen eines Abstands zwischen dem Fahrzeug (1) und einem Hindernis mittels wenigstens eines Abstandssensors (15, 16),
b) Ausüben einer Bremskraft auf wenigstens ein Rad (2a-d) des Fahrzeugs (1) mittels einer Bremsvorrichtung (3a-d, 6a-d), wobei die Bremskraft abhängig von dem durch den Abstandssensor (15, 16) gemessenen Abstand so angepasst wird, dass das Fahrzeug (1) angehalten wird, bevor es auf das Hindernis prallt, wobei die Bremskraft mittels einer elektrischen Bremsvorrichtung (3a-d, 6a-d) ausgeübt wird, die mit einer integrierten Feststellbremse versehen ist, welche die Verriegelung der elektrischen Bremsvorrichtung (3a-d, 6a-d) in einer angezogenen Position ermöglicht,
c) wobei das Verfahren den Schritt (207) umfasst, der darin besteht, die Feststellbremse auszulösen, sobald das Fahrzeug seit einem bestimmten Zeitraum steht,
**dadurch gekennzeichnet, dass** es eine iterative Berechnungsschleife umfasst, welche Schritte beinhaltet, bestehend aus:
Bestimmen (203) einer zeitlichen Veränderungsrate der Bremskraft in Abhängigkeit von dem durch den Abstandssensor (15, 16) gemessenen Abstand,
Verändern (204) der durch die Bremsvorrichtung (3a-d, 6a-d, 20) ausgeübten Bremskraft gemäß der zeitlichen Veränderungsrate, wobei die während einer Iteration der Berechnungsschleife auszuübenden Bremskraft dadurch berechnet wird, dass man die Summe der Bremskraft der vorhergehenden Iterationen und des Produkts der zeitlichen Veränderungsrate mit einer Ausführungsdauer der iterativen Schleife bildet,
wobei das Verfahren den Schritt umfasst, der darin besteht, eine anfängliche Bremskraft zu messen, die von der Bremsvorrichtung vor dem Eintritt in die Berechnungsschleife ausgeübt wird, wobei die Bremskraft der vorhergehenden Iteration bei der ersten Durchführung der iterativen Schleife gleich der ursprünglichen Bremskraft gesetzt wird.

2. Verfahren gemäß Anspruch 1, **dadurch gekennzeichnet, dass** es die Schritte umfasst, bestehend aus:
Bestimmung der Neigung einer Fläche, auf welcher sich das Fahrzeug (1) befindet, mittels eines Neigungssensors (12),
Anpassen der Klemmkraft der Feststellbremse in Abhängigkeit von der Neigung.

3. Verfahren gemäß Anspruch 1 oder Anspruch 2, **dadurch gekennzeichnet, dass** es die Schritte umfasst, bestehend aus:
Bestimmen eines zum Durchfahren verbleibenden Abstandes, indem man einen vorgegebenen Zielhalteabstand von dem durch den Abstandssensor (15, 16) gemessenen Abstand abzieht,
Bestimmung einer Gesamtgeschwindigkeit des Fahrzeugs (1),
Bestimmen eines vorhersehbaren Halteabstands in Abhängigkeit von der Gesamtgeschwindigkeit und einer vorgegebenen Zielverzögerung,
Bestimmen eines Rückwirkungsterms in Abhängigkeit von der Differenz zwischen dem vorhersehbaren Halteabstand und dem zum durch Fahren verbleibenden Abstand, Bestimmen der zeitlichen Veränderungsrate der Bremskraft in Abhängigkeit von dem Rückwirkungsterm.

4. Verfahren gemäß einem der Ansprüche 1 bis 3, **dadurch gekennzeichnet, dass** es die Schritte umfasst, bestehend aus:
Bestimmen einer Bewegungsrichtung des Fahrzeugs (1),
Berechnen der zeitlichen Veränderungsrate in Abhängigkeit der Bewegungsrichtung des Fahrzeugs.

5. Verfahren gemäß einem der Ansprüche 1 bis 4, **dadurch gekennzeichnet, dass** es die Schritte umfasst, bestehend aus:
Bestimmen der Neigung der Fläche, auf welcher sich das Fahrzeug (1) befindet, mittels eines Neigungssensors (12),
Berechnen der zeitlichen Veränderungsrate in Abhängigkeit von dieser Neigung.

6. Verfahren gemäß einem der Ansprüche 3 bis 5, **dadurch gekennzeichnet, dass** der Rückwirkungsterm berechnet wird, indem man die Summe eines Terms, der proportional zu der Differenz zwischen dem vorhersehbaren Halteabstand und dem zum Durchfahren verbleibenden Abstand ist, eines Terms, der proportional zur zeitlichen Ableitung dieser Differenz ist, und eines Terms, der proportional zu einem zeitlichen Integral der Differenz ist, bildet, das Produkt dieser Summe und eines Faktors bildet, wobei der Faktor abhängig von der Bewegungsrichtung des Fahrzeugs ist,
man einen Abstandsterm zu dem Produkt addiert, wenn der zum Durchfahren verbleibende Abstand kleiner als eine Annäherungsschwelle ist oder wenn die Differenz zwischen dem vorhersehbaren Halteabstand und dem zum Durchfahren verbleibenden Abstand größer als eine Differenzschwelle ist,
man einen Neigungsterm zu diesem Produkt addiert, wobei der Neigungsterm abhängig von der Neigung ist,
wobei die zeitliche Veränderungsrate gleich dem so erhaltenen Rückwirkungsterm ist.

7. Assistenzsystem zum Führen eines Fahrzeugs (1), wobei das System eine Bremssteuerung (20), eine Bremsvorrichtung (3a-d, 6a-d) zum Ausüben einer durch die Bremssteuerung (20) gesteuerten Bremskraft auf wenigstens ein Rad (2a-d) des Fahrzeugs (1) und wenigstens einen Abstandssensor (15, 16) umfasst, der den Abstand zwischen dem Fahrzeug (1) und einem Hindernis messen kann, wobei die Bremssteuerung (20) die Bremskraft abhängig von dem durch den Abstandssensor (15, 16) gemessenen Abstand so anpassen kann, dass das Fahrzeug angehalten wird, bevor das Fahrzeug (1) auf das Hindernis prallt,
wobei die Bremsvorrichtung (3a-d, 6a-d) eine elektrische Bremsvorrichtung ist, die mit einer integrierten Feststellbremse versehen ist, wobei die Bremssteuerung (20) die Feststellbremse auslösen kann, wenn das Fahrzeug (1) seit einem bestimmten Zeitraum ansteht,
**dadurch gekennzeichnet, dass** die Bremssteuerung (20) eine iterative Berechnungsschleife ausführen kann, welche die Schritte beinhaltet, bestehend aus Bestimmen (203) einer zeitlichen Veränderungsrate der Bremskraft in Abhängigkeit von dem durch den Abstandssensor (15, 16) bestimmten Abstand,
Verändern (204) der durch die Bremsvorrichtung ausgeübten Bremskraft gemäß der zeitlichen Veränderungsrate, wobei die während einer Iteration der Berechnungsschleife auszuübende Bremskraft dadurch berechnet wird, dass man die Summe der Bremskraft aus der vorhergehenden Iteration und des Produkts der zeitlichen Veränderungsrate mit der Ausführungszeit der iterativen Schleife bildet, wobei das System einen Klemmkraftsensor umfasst, der eine ursprüngliche Bremskraft messen kann, die durch die Bremsvorrichtung ausgeübt wird, wobei die Bremskraft der vorhergehenden Iteration beim ersten Durchlaufen der iterativen Schleife gleich der ursprünglichen Bremskraft gesetzt wird.

8. System gemäß Anspruch 7, **dadurch gekennzeichnet, dass** es einen Neigungssensor (12) umfasst, der die Neigung einer Fläche messen kann, auf welcher sich das Fahrzeug (1) befindet, wobei die Steuerung (20) die Klemmkraft der Feststellbremse in Abhängigkeit von der Neigung regeln kann.

9. System gemäß Anspruch 7 oder Anspruch 8, **dadurch gekennzeichnet, dass** die Bremsvorrichtung wenigstens einen elektromechanischen Bügel mit zwei Platten umfasst, welche eine Klemmkraft auf eine mit einem Rad des Fahrzeugs verbundene Scheibe ausüben können, wobei ein elektrischer Motor die beiden Platten bewegen kann und ein mechanischer Riegel vorgesehen ist, der in eine stabile Verriegelungsposition umgeschaltet werden kann, in der die Platten in einem Zustand gehalten werden, in welchem die Platten eine erhöhte Klemmkraft auf die Scheibe ausüben.

10. System gemäß einem der Ansprüche 7 bis 9, **dadurch gekennzeichnet, dass** es einen Geschwindigkeitssensor (11a-d) umfasst, der die Gesamtgeschwindigkeit des Fahrzeugs messen kann, wobei die Bremssteuerung (20) die Veränderungsrate in Abhängigkeit von der Gesamtgeschwindigkeit bestimmen kann.

11. System gemäß einem der Ansprüche 7 bis 10, **dadurch gekennzeichnet, dass** die Bremssteuerung (20) die Veränderungsrate in Abhängigkeit von der Neigung bestimmen kann.

12. System gemäß einem der Ansprüche 7 bis 11, **dadurch gekennzeichnet, dass** es wenigstens einen Abstandssensor (16) umfasst, der auf der Rückseite des Fahrzeugs (1) so angeordnet ist, dass der Abstand zwischen dem Fahrzeug (1) und einem Hindernis messen kann, das sich in Bahn des Fahrzeugs (1) befindet, wenn dieses im Rückwärtsgang fährt.

13. System gemäß einem der Ansprüche 7 bis 12, **dadurch gekennzeichnet, dass** es wenigstens einen Abstandssensor (15) umfasst, der auf der Vorderseite des Fahrzeugs (1) so angeordnet ist, dass er den Abstand zwischen dem Fahrzeug (1) und einem Hindernis messen kann, das sich in der Bahn des Fahrzeugs (1), wenn dieses im Vorwärtsgang fährt.

14. System gemäß einem der Ansprüche 7 bis 13, **dadurch gekennzeichnet, dass** es mehrere Abstandssensoren (15, 16), einen Winkelsensor zur Messung des Winkels, der von den Steuerrädern (2a-d) des Fahrzeugs (1) gegen der Längsachse des Fahrzeugs gebildet wird, umfasst, wobei die Bremssteuerung (20) den Abstand zwischen dem Fahrzeug (1) und dem Hindernis in Abhängigkeit von den durch die Abstandssensoren (15, 16) gemessenen Abständen und dem durch den Winkelsensor gemessenen Winkel bestimmen kann.
